Europäisches Patentamt

European Patent Office

Office européen des brevets

(11) Veröffentlichungsnummer: **0 533 960 B1**

# EUROPÄISCHE PATENTSCHRIFT

(45) Veröffentlichungstag der Patentschrift: **12.10.94**

(51) Int. Cl.5: **G01M 3/18**, F17D 5/06

(21) Anmeldenummer: **91112753.8**

(22) Anmeldetag: **29.07.91**

(54) **Einrichtung und Verfahren zur Ermittlung von Undichtigkeiten an doppelwandigen Leitungsrohren für flüssige Medien.**

(43) Veröffentlichungstag der Anmeldung:
**31.03.93 Patentblatt 93/13**

(45) Bekanntmachung des Hinweises auf die
Patenterteilung:
**12.10.94 Patentblatt 94/41**

(84) Benannte Vertragsstaaten:
**AT BE CH DE DK ES FR GB GR IT LI LU NL SE**

(56) Entgegenhaltungen:
**EP-A- 0 319 200**

**PATENT ABSTRACTS OF JAPAN vol. 5, no. 202 (P-95)(874) 22. Dezember 1981 & JP-A-56126732**

(73) Patentinhaber: **Brandes, Bernd**
**Mühlengrund 4**
**D-24329 Grebin (DE)**

(72) Erfinder: **Der Erfinder hat auf seine Nennung verzichtet**

(74) Vertreter: **Einsel, Robert, Dipl.-Ing.**
**Petersburgstrasse 28**
**D-29223 Celle (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Einrichtung nach dem Anspruch 10 und ein Verfahren nach dem Anspruch 1.

Bei aus Sicherheitsgründen doppelwandigen Leitungsrohren mit einem das flüssige Medium führenden Innenrohr und einem das Innenrohr umgebenden Außenrohr besteht in der Praxis die Aufgabe, ein Leck in einer der Wandungen möglichst schnell und einfach festzustellen und außerdem die örtliche Lage des Leckes zu ermitteln. Bei einem derartigen Leck dringt im allgemeinen das flüssige Medium des Innenrohres oder von außen anstehendes Wasser in den Zwischenraum ein. Bisher war es jedoch schwierig, auf einfache Weise einen derartigen Fehler in Form eines Leckes festzustellen und zu orten. Das Problem bestand darin, daß der Luftraum zwischen den Rohren ständig durch Temperaturwechsel (atmen) zur Schwitzwasserbildung neigte und damit an eingebrachten Sensorkabeln üblicher Bauart oft von Anfang an Fehlermeldung verursachte. Bei Sanierung z.B. von Abwasserrohren wird der Raum zwischen den Rohren aus Stabilitätsgründen oft mit Schaumbeton gefüllt, der naturgemäß naß und damit als Lecküberwachung eigentlich ungeeignet ist. Wenn innerhalb eines derartigen Leitungsrohres ein Leck auftritt, wird zwar die Feuchtigkeit des Füllmaterials in dem Zwischenraum an dieser Stelle erhöht. Diese Erhöhung der Feuchtigkeit ist jedoch an den zugänglichen Enden des Leitungsrohren weder optisch noch meßtechnisch kurzfristig feststellbar.

Bei Neuinstallation wird zur Stabilisierung der Rohre untereinander auch ein Ausdämmen des Zwischenraumes mit Kunststoffschaum praktiziert, wodurch der Zwischenraum zwar trocken bleibt, eine Leckmeldung jedoch stark verzögert wird, wenn der Schaum geschlossene Poren hat, oder aber die Schadensausbreitung begünstigt wird, wenn er offenporig ausgeführt wird.

Der Erfindung liegt die Aufgabe zugrunde, ein einfaches universell anwendbares Verfahren zur Fehlerermittlung und Fehlerortung bei einem derartigen Leitungsrohr zu schaffen.

Diese Aufgabe wird durch die im Anspruch 1 angegebene Erfindung gelöst. Im Anspruch 10 ist eine Einrichtung angegeben.

Die häufig als Sicherheitsmaßnahme vorgesehene Doppelwandigkeit ermöglicht eine schnelle und oft irreversible Ausbreitung einer Flüssigkeit im Schadensfall. Die bisher eine Ortbarkeit behinderte Füllung des Ringraumes wird jetzt mit ihren bisher als nachteilig wirksamen Eigenschaften (Verstopfen des Ringraums, Einschluß der Baufeuchte) genutzt, um zu Schadensbegrenzung, umfassender Überwachung und leichter Ortbarkeit gleichzeitig zu kommen.

Bei der erfindungsgemäßen Lösung werden die Isolation des Füllmaterials gegen Erde (innen dargestellt durch das Medium, außen z.B. durch Bodenfeuchte) und der Schwerpunkt in der Leitfähigkeit gegenüber der Erde ohne Vorliegen einer Fehlerquelle als Normalzustand definiert, unabhängig von ihren jeweiligen absoluten Größen. Diese Werte werden dann überwacht. Eine Abweichung von diesem Werten wird als Grundlage für eine Fehlerstelle und für notwendige Reaktionen registriert. Eine Feuchtigkeit in dem Füllmaterial in dem Ringraum, die an sich bisher möglichst vermieden wurde, wird bewußt in Kauf genommen und in vorteilhafter Weise für die Bildung der meßbaren Leitfähigkeit des Füllmaterials ausgenutzt. Die Leitfähigkeit des Füllmaterials kann durch Beimengungen aus elektrisch leitendem Material bewußt erhöht und dadurch kalkulierbar stabilisiert werden. Vorzugsweise wird eine plötzliche Abweichung der gemessenen Werte von den über einen längeren Zeitraum konstanten Werten als Kriterium für das Vorliegen eines Fehlers gewertet. Durch Vergleich der Meßwerte kann darüberhinaus die Lage der Fehlerstelle entlang des Leitungsrohres mit ausreichender Genauigkeit ermittelt werden.

Vorzugsweise wird das Meßergebnis jeweils vom Ende des Leitungsrohres über eine Meßleitung zum Anfang des Leitungsrohres übertragen. Am Anfang des Leitungsrohres werden dann die Meßergebnisse vom Anfang und vom Ende des Leitungsrohres der Meß- und Auswertschaltung zugeführt. Diese gibt dann einen Hinweis darauf, ob und an welcher Stelle des Leitungsrohres eine Fehlerstelle vorliegt. Gemäß einer Weiterbildung der Erfindung werden die Meßergebnisse von zwei an sich ähnlichen Leitungsrohr-Strecken verglichen, die ohne Auftreten eines Fehlers bei gleichen Umweltbedingungen etwa gleich sind. Aus einer Abweichung zwischen diesen im Normalfall gleichen oder ähnlichen Meßergebnissen kann auf das Vorliegen einer Fehlerstelle geschlossen werden. Im Regelfall liegt der Fehler in der Leitungsrohr-Strecke, die einen geringeren Isolationswiderstand des Füllmaterials gegen Erde aufweist.

Die Erfindung wird im folgenden anhand der Zeichnung erläutert. Darin zeigen

Fig. 1 im Prinzip ein Leitungsrohr mit einer erfindungsgemäßen Meßeinrichtung,

Fig. 2, 3 Ersatzschaltbilder für die elektrischen Eigenschaften des Leitungsrohres und

Fig. 4 eine vollständige Meßeinrichtung für ein Leitungsrohr.

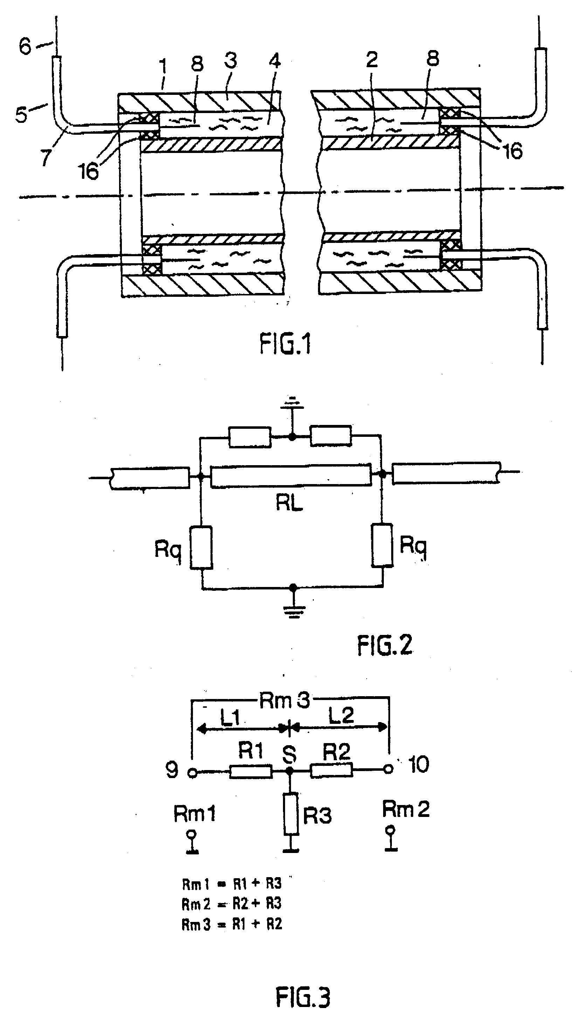

In Fig. 1 besteht das Leitungsrohr 1 aus dem Innenrohr 2 zum Transport eines flüssigen Mediums sowie dem Außenrohr 3. In dem Ringraum zwischen den beiden Rohren 2, 3 befindet sich das Füllmaterial 4. Jeweils am Anfang und am Ende des Rohres 1 sind vom Stirnende her in das Füllmaterial 4 Sonden 5 eingesteckt, und zwar zwei am Anfang und zwei am Ende an zwei gegeneinander versetzt angeordneten, z.B. diametral gegenüberliegenden Stellen. Die Sonden bestehen aus einem Leiter 6 und einer Isolierung 7, wobei jeweils ein Ende 8, das von der Isolation befreit ist, in Kontakt mit dem Füllmaterial 4 steht. Die von dem Rohr 1 abgewandten Enden der Sonden 5 sind jeweils an die Meßeinrichtung angeschlossen. Die Stirnenden des Füllmaterials 4 sind jeweils mit einer elektrisch isolierten Schicht 16 abgeschlossen damit hier keine unerwünschte Erdung erfolgt.

Fig. 2 zeigt in vereinfachter Darstellung für das Füllmaterial 4 die ohmschen Längswiderstände RL sowie die über die Länge verteilten Querwiderstände Rq, die die Isolation gegen Erde darstellen. Jedes Leitungsrohr hat einen sogenannten Isolationsschwerpunkt oder Fehlerschwerpunkt. Das ist ein Punkt im Verlauf des Leitungsrohres, bei dem der Schwerpunkt der Leitfähigkeit gegenüber Erde zu denken ist. Bei einem absolut fehlerfreien Leitungsrohr liegt dieser Schwerpunkt bei 50 % der Länge, da dann der Ableitwiderstand Rq gleichmäßig über die gesamte Rohrlänge verteilt ist.

Fig. 3 zeigt vereinfacht das elektrische Ersatzschaltbild. R1, R2 stellen die Längswiderstände des Füllmaterials 4 dar, während R3 den Fehlerschwerpunkt S darstellt. Durch Messung des Eingangswiderstandes Rm1 an der Klemme 9 kann bei nicht belasteter Ausgangsklemme 10 der Wert Rm1 = R1 + R3 ermittelt werden. Entsprechend wird durch Messung des Eingangswiderstandes an der Klemme 10 bei offener Klemme 9 der Wert Rm2 = R2 + R3 ermittelt. Durch Messung der Widerstandswerte zwischen den Klemmen 9 und 10 indessen kann der Wert Rm3 = R1 + R2 ermittelt werden. Dadurch ergeben sich die drei dargestellten Gleichungen mit drei Unbekannten, aus denen die Werte für R1, R2, R3 getrennt errechnet werden können. Aus dem Verhältnis von R1 zu R2 in entsprechender Anwendung auf das Längenverhältnis kann die Lage des Schwerpunktes S ermittelt werden. Dabei gilt R1/R2 = L1/L2. Diese Messung gilt unabhängig von den absoluten Wert von R1, R2, R3. Eine Erhöhung der Feuchtigkeit in dem gesamten Ringraum zwischen den Rohren 2, 3 würde daß Meßergebnis bezüglich der Lage des Schwerpunktes S nicht verfälschen. Andererseits würde eine Fehlerstelle die Leitfähigkeit an der Lage der Fehlerstelle gegen Erde erhöhen, also den Widerstand R3 verringern. Daneben sind zur Ortung viele Methoden aus der Kabelmeßtechnik, insbesondere die 4-Pol-Messung über die Sonden 5 möglich.

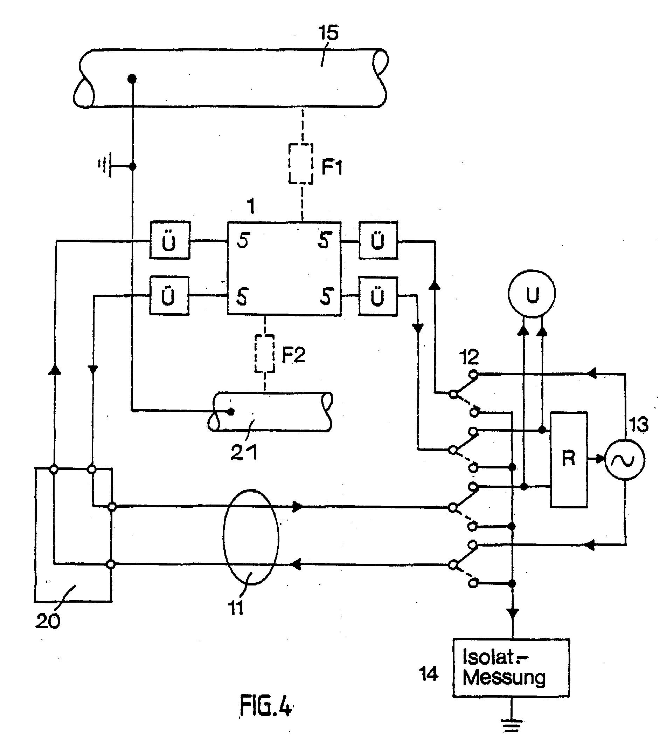

In Fig. 4 ist vereinfacht ein Leitungsrohr 1 dargestellt, an das vier Sonden 5 gemäß Fig. 1 angeschlossen sind. Jede Sonde 5 hat zum Füllmaterial 4 einen Übergangswiderstand Ü. Die Meßergebnisse am linken Ende des Leitungsrohres 1 werden der Meßdose 20 zugeführt und gelangen von dort über die Meßleitung 11 zurück auf den rechten Anfang des Leitungsrohres 1. Der Umschalter 12 verbindet in der dargestellten Stellung den Wechselspannungsgenerator 13 jeweils mit einer der Sonden am Anfang und am Ende des Leitungsrohres 1. Die dem Leitungsrohr 1 am Anfang und Ende zugeführten Spannungen gelangen außerdem an den Regler R und werden dort verglichen. In Abhängigkeit von dem Vergleich wird die Spannungsquelle 13 so gesteuert, daß jeweils die für die Messung notwendige Amplitude der Spannungen vorliegt. In der gestrichelten Stellung des Umschalters 12 werden die Meßergebnisse vom Anfang und Ende des Leitungsvorganges 1 der Isolationsmeßschaltung 14 zugeführt und dort in der beschriebenen Weise ausgewertet. Mit F1 ist eine denkbare Fehlerstelle bezeichnet, die zwischen dem Leitungsrohr 1 und einer äußeren Umhüllung, z.B. Betonrohr 15, oder direkt dem Erdreich auftreten kann. Mit F2 ist eine Fehlerstelle bezeichnet, die zwischen dem Leitungsrohr 1 und einem Meßrohr 21 auftreten kann. Der Umschalter 12 wird entsprechend einem Programm so betätigt, daß die einzelnen Messungen gemäß Fig. 3 zeitlich nacheinander durchgeführt werden können.

Bei den beschriebenen Rohren kann es sich um Rohre für Abwasser, um Rohre für Frischwasser, für flüssige Chemikalien, Wasser für den Transport von Fernwärme oder sonstige Flüssigkeiten handeln. Die beschriebene Fehlerstelle F1 kann auch zwischen dem Leitungsrohr 1 und einer äußeren Umhüllung wie z.B. einem Betonrohr oder direkt dem Erdreich auftreten. Die Fehlerstellen F1 und F2 können auch undichte Fugen in der Wandung sein, die elektrisch isolierend das Füllmaterial 4 umschließt.

**Patentansprüche**

1. Verfahren zur Ermittlung von Undichtigkeiten an Leitungsrohren für flüssige Medien mit einem das Medium führenden Innenrohr (2), einem das Innenrohr (2) umgebenden Außenrohr (3) und einer Aussteifung aus Füllmaterial (4) in dem Ringraum zwischen beiden Rohren, dadurch gekennzeichnet, daß das Füllmaterial (4) mit einer definierten elektrischen Leitfähigkeit versehen wird und die Beschaffenheit eines Fehlerschwerpunktes (S) durch Messung des ohmschen Widerstandes des Füllmaterials (4) am Anfang und Ende des Leitungsrohres (1) jeweils gegen ein innen durch das Medium und außen durch die Bodenfeuchtigkeit gebildetes Bezugspotential sowie zwischen Anfang und Ende des Leitungsrohres (1) ermittelt und die örtliche Lage nach den Methoden der Kabelmeßtechnik ermittelt wird.

2. Verfahren nach Anspruch 1, dadurch gekennzeichnet, daß die Leitfähigkeit durch eine beabsichtigte Feuchtigkeit des Füllmaterials (4) gebildet wird.

3. Verfahren nach Anspruch 1, dadurch gekennzeichnet, daß die Leitfähigkeit durch elektrisch leitfähige Beimengungen im Füllmaterial (4) gebildet bzw. gewährleistet wird.

4. Verfahren nach Anspruch 3, dadurch gekennzeichnet, daß die Beimengungen ein nicht korrosives Material enthalten.

5. Verfahren nach Anspruch 1, dadurch gekennzeichnet, daß das Meßergebnis am Ende des Leitungsrohres (1) über eine Meßleitung (11) zum Anfang des Leitungsrohres (1) übertragen wird.

6. Verfahren nach Anspruch 5, dadurch gekennzeichnet, daß an den Anfang und das Ende des Leitungsrohres (1) eine Wechselspannung angelegt wird und ein Regler (R) vorgesehen ist, der die Amplitude der Wechselspannungen auf Optimalwerte für die Messung regelt.

7. Verfahren nach Anspruch 1, **dadurch gekennzeichnet**, daß die Meßwerte im fehlerfreien Zustand als Normalzustand definiert werden und eine plötzliche Abweichung von den über einen längeren Zeitraum konstanten Werten als Auftreten eines Fehler gewertet wird.

8. Verfahren nach Anspruch 1, **dadurch gekennzeichnet**, daß die Meßergebnisse von zwei ähnlichen Leitungsrohr-Strecken verglichen werden und aus einer Abweichung zwischen den Meßergebnissen auf das Vorliegen einer Fehlerstelle geschlossen wird.

9. Verfahren nach Anspruch 1, **dadurch gekennzeichnet**, daß das Füllmaterial an den Rohrenden elektrisch isolierend abgeschlossen wird.

10. Einrichtung für ein Verfahren nach Anspruch 1, **gekennzeichnet durch** Meßstäbe (5) aus einem von einer Isolation (7) umgebenen Leiter (6), die an einem Ende mit dem von der Isolation (7) befreiten Leiter (6) vom Stirnende eines doppelwandigen Leitungsrohres (1) in dessen Füllmaterial (4) eingesteckt und am anderen Ende an die elektrische Meßeinrichtung (14) angeschlossen sind.

11. Einrichtung nach Anspruchs 10, **dadurch gekennzeichnet**, daß für den Anfang und das Ende des Leitungsrohres (1) jeweils zwei an zueinander versetzt angeordneten Stellen des Rohrquerschnitts in das Füllmaterial (4) eingesteckte Meßstäbe (5) vorgesehen sind.

**Claims**

1. A method of detecting defects in a pipe system which transfers liquid medium, the pipe system including an inner pipe (2) carrying the liquid medium, an outer pipe (3) surrounding the inner pipe (2) and a framework of a filler material (4) in an annular space between both of the said pipes, comprising the steps of:
   providing the filler material (4) with a definable electrical conductivity and
   detecting the character of a concentration of error (S) by measuring the ohmic resistance of the filler material (4) at the beginning and at the end of a conduit (1) each against an reference voltage level formed by the medium at the inner and by the humidity of ground at the outer, and between the beginning and the end of the conduit (1) and
   determining the location of the defect by the methods of measuring cables.

2. A method as defined in claim 1, wherein said providing step includes:
   forming the electrical conductivity by a contemplated wetting of the filler material (4).

3. A method as defined in claim 1, wherein said providing step includes:
   forming or garanting the electrical conductivity by adding electrically conductive material to the filler material (4).

4. A method as defined in claim 3, wherein said adding step containes:
   adding electrically conductive, non-corrosive material to the filler material.

5. A method as defined in claim 1, further comprising the step of:
   transferring the measured result at the end of the conduit (1) by way of a measuring line to the beginning of the conduit (1).

6. A method as defined in claim 5, wherein said transferring step comprises:
   applying an alternating voltage at the beginning and at the end of the conduit (1) and
   providing a regulator (R) regulating the amplitude of the alternating voltage to optimized values concerning the measurement.

**7.** A method as defined in claim 1, wherein said measuring step includes:

defining the measured values when the conduit having no defects respective normal values and

identifying an abruptly change from the longtime constant values as the appearing of an defect.

**8.** A method as defined in claim 1, wherein said measuring step includes:

comparing the measured results of two similar sections of a conduit and

determining the occurence of a defect by detecting a deviation between the measured results.

**9.** A method as defined in claim 1, wherein said providing step includes:

terminating the filler material at the beginning and at the end of the conduit with electrically isolating material.

**10.** An apparatus for a method of claim 1, comprising: measuring probes (5) formed by a conductor (6) surrounded by insulation (7) being inserted at one end together with the conductor (6) having the insulation (7) removed from the front end of a double-walled conduit to its filler material (4) and being connected to the electrical measuring device (14) at the other end.

**11.** An apparatus as defined in claim 10, further comprising:

measuring probes (5) being inserted in the filler material (4) two for the beginning and two for the end of the conduit each at positions of the transverse section of the conduit being arranged mutually offset from each other.

**Revendications**

**1.** Procédé pour découvrir des inétanchéités aux conduits pour des milieux liquides avec un conduit intérieur (2) portant dans soi le milieu, un conduit extérieur (3) enclorant le conduit intérieur (2) et un renforcement de matériel de remplissage (4) disposé dans l'espace annulaire entre les deux conduits, **caractérisé en ce que** le matériel de remplissage (4) est muni d'une conductibilité électrique définite et l'état d'éffort principal des défauts (S) est découvert au moyen de mesurage de la résistance ohmique du matériel de remplissage (4) au commencement et au fin du conduit (1) respectivement au potentiel de référence formé au dedans par le milieu et au dehors par l'humidité du terrain ainsi que entre le commencement et le fin du conduit (1) et la location est découverte selon les méthodes de mesurage de câbles.

**2.** Procédé selon la revendication 1, **caractérisé en ce que** la conductibilité est formée par une humidité voulue du matériel de remplissage (4).

**3.** Procédé selon la revendication 1, **caractérisé en ce que** la conductibilité est formée ou garantite au moyen des additions conductibles à l'électricité.

**4.** Procédé selon la revendication 3, **caractérisé en ce que** les additions prévoient un matériel non-corrosif.

**5.** Procédé selon la revendication 1, **caractérisé en ce que** le résultat de mesurage au fin de la conduit (1) est transmis par un conduit à mesurage au commencement du conduit (1).

**6.** Procédé selon la revendication 5, **caractérisé en ce que** un potentiel alternatif est mis au commencement et au fin du conduit (1) et un régulateur (R) est muni, qui règle l'amplitude du potentiel alternatif aux valeurs optimalles pour la mesurage.

**7.** Procédé selon la revendication 1, **caractérisé en ce que** les valeurs de mesurage sont définites à l'état sans faute comme l'état normal et une divergence soudaine des valeurs constantes pendant une période plus longtemps est évaluée comme l'apparition d'un défaute.

**8.** Procédé selon la revendication 1, **caractérisé en ce que** les résultats de mesurage de deux trajets de conduit semblables sont comparés et d'une divergence entre les résultats de mesurage est conclut à la présence d'un endroit défectueux.

**9.** Procédé selon la revendication 1, **caractérisé en ce que** le matériel de remplissage est finit isolant d'électricité aux fins de conduit.

**10.** Appareil pour un procédé selon la revendication 1, **caractérisé en ce que** des perches de mesure (5) d'un conducteur entournant d'une isolation (7) sont munis, qui sont fichés à l'un fin du fin de front d'un conduit (1) à double paroi à son matériel de remplissage (4) avec le conducteur débarrassé de l'isolation (7) et qui sont attachés à l'autre fin à l'installation de mesurage (14).

11. Appareil selon la revendication 10, **caractérisé en ce que** pour le commencement et le fin du conduit (1) sont munis respectivement deux perches de mesure (5) fichés aux endroits de la coupe transversale de conduit disposés désaxés l'un à l'autre au matériel de remplissage (4).

FIG.1

FIG.2

$Rm1 = R1 + R3$

$Rm2 = R2 + R3$

$Rm3 = R1 + R2$

FIG.3

7

FIG.4